# FASCICULE DE BREVET EUROPEEN

(11) **EP 2 931 529 B1**
(45) Date de publication et mention de la délivrance du brevet: **21.02.2018**
(21) Numéro de dépôt: 13803025.9
(22) Date de dépôt: 12.12.2013
(51) Int. Cl.: B60C 1/00, C08K 5/092, C08K 5/3445, C08L 15/00

(54) **PNEUMATIQUE COMPORTANT UNE COMPOSITION DE CAOUTCHOUC COMPRENANT UN ELASTOMERE EPOXYDE RETICULE PAR UN POLY-ACIDE CARBOXYLIQUE**
REIFEN MIT EINER KAUTSCHUKZUSAMMENSETZUNG MIT EINEM POLYCARBONSÄUREVERNETZTEN EPOXIDELASTOMER
TYRE COMPRISING A RUBBER COMPOSITION COMPRISING AN EPOXIDE ELASTOMER CROSSLINKED WITH A POLYCARBOXYLIC ACID

(30) Priorité: 17.12.2012 FR 1262162
(43) Date de publication de la demande: 21.10.2015
(73) Titulaire: Compagnie Générale des Etablissements Michelin, 63000 Clermont-Ferrand (FR)
(72) Inventeur: FLEURY, Etienne, F-63040 Clermont Ferrand Cedex 9 (FR); SCHNELL, Benoit, F-63040 Clermont-Ferrand Cedex 9 (FR)
(74) Mandataire: Sidhu, Alban
(86) Numéro de dépôt international: PCT/EP2013/076417
(87) Numéro de publication internationale: WO 2014/095583

(56) Documents cités:
- FR-A1- 2 946 050
- US-A1- 2012 149 806
- MYRIAM PIRE, SOPHIE NORVEZ, ILIAS ILIOPOULOS, BENOIT LE ROSSIGNOL, LUDWIK LEIBLER: "iMIDAZOLE-PROMOTED ACCELERATION OF CROSSLINKING IN EPOXIDIZED NATURAL RUBBER/DICARBOXYLIC ACID BLENDS", POLYMER, vol. 52, 27 octobre 2011 (2011-10-27), pages 5243-5249, XP002698721, DOI: 10.1016/J.POLYMER.2011.09.032
- MYRIAM PIRE, SOPHIE NORVEZ, ILIAS ILIOPOULOS, BENOIT LE ROSSIGNOL, LUDWIK LEIBLER: "Epoxydized natural rubber/dicarboxylic acid self-vulcanized blends", POLYMER, vol. 51, 26 novembre 2010 (2010-11-26), pages 5903-5909, XP002698722, DOI: 10.1016/j.polymer.2010.10.023
- DATABASE WPI Week 201266 Thomson Scientific, London, GB; AN 2012-M43946 XP002698723, & JP 2012 184442 A (SUMITOMO RUBBER IND LTD) 27 septembre 2012 (2012-09-27)

## Description

La présente invention est relative aux pneumatiques munis de compositions de caoutchouc, en particulier de compositions de caoutchouc à base d'élastomères comportant des fonctions époxydes.

Depuis que les économies de carburant et la nécessité de protéger l'environnement sont devenues une priorité, il s'est avéré nécessaire de produire des pneumatiques ayant une résistance au roulement aussi faible que possible. Ceci a été rendu possible notamment grâce à l'utilisation, dans les compositions de caoutchouc, de charges inorganiques spécifiques, capables de rivaliser du point de vue renforçant avec une charge organique telle que le noir de carbone conventionnel de grade pneumatique, tout en offrant à ces compositions une hystérèse plus faible, synonyme d'une plus basse résistance au roulement pour les pneumatiques les comportant.

Diminuer davantage la résistance au roulement demeure dans le contexte économique et écologique actuel un souci permanent malgré les bas niveaux atteints respectivement tant avec les charges inorganiques spécifiques qualifiées de "renforçantes" qu'avec un noir de carbone. De nombreuses pistes ont déjà été explorées pour abaisser encore l'hystérèse des compositions de caoutchouc renforcées avec de telles charges renforçantes. Néanmoins, il demeure toujours intéressant de poursuivre un objectif de baisse de la consommation des véhicules, baisse qui peut résulter d'une amélioration des propriétés hystérétiques des compositions de pneumatiques.

Par ailleurs, il est connu, et habituel depuis de très nombreuses années, d'utiliser dans des pneumatiques des compositions de caoutchouc dont la matrice élastomérique est réticulée au soufre, cette réticulation est alors nommée vulcanisation. Le système de vulcanisation classique combine du soufre moléculaire et au moins un accélérateur de vulcanisation. Cependant, il est connu qu'un tel système pénalise la mise en oeuvre de la composition avant cuisson par le phénomène du grillage. On rappelle que le phénomène dit de "grillage" conduit rapidement, au cours de la préparation des compositions de caoutchouc, à des vulcanisations prématurées *("scorching"),* à des viscosités à l'état cru très élevées, en fin de compte à des compositions de caoutchouc quasiment impossibles à travailler et à mettre en oeuvre industriellement.

Par conséquent, les systèmes de vulcanisation ont été perfectionnés au fil des années, en association avec les procédés de préparation des compositions de caoutchouc afin de maitriser les inconvénients évoqués ci-dessus. Ainsi, les compositions sont souvent complexes et comprennent en plus du soufre moléculaire, ou d'un agent donneur de soufre moléculaire, des accélérateurs de vulcanisation, des activateurs, et éventuellement des retardateurs de vulcanisation. A présent, il serait intéressant pour les manufacturiers de trouver des systèmes de réticulation aussi performants que la vulcanisation, tout en simplifiant les compositions et leur préparation.

Poursuivant leurs recherches, les demanderesses ont à présent trouvé que des compositions pour pneumatiques particulières pouvaient être préparées de manière simplifiée par rapport aux compositions classiquement vulcanisées, et que ces compositions pouvaient présenter des propriétés hystérétiques améliorées.

En conséquence, un premier objet de l'invention concerne un pneumatique comportant une composition de caoutchouc à base d'au moins un élastomère diénique majoritaire comprenant des fonctions époxydes, au moins une charge renforçante, et un système de réticulation comprenant un poly-acide carboxylique de formule générale (I) 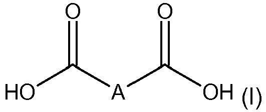 dans laquelle A représente une liaison covalente ou un groupement hydrocarboné comportant au moins 1 atomes de carbone, éventuellement substitué et éventuellement interrompu par un ou plusieurs hétéroatomes, et un imidazole de formule générale (II) 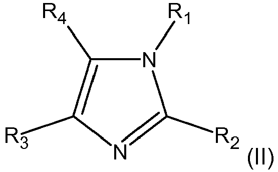 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné,
- ou encore R₃ et R₄ forment ensemble avec les atomes de carbone du cycle imidazole auxquels ils se rattachent, un cycle.

Préférentiellement, l'invention a pour objet un pneumatique tel que défini ci-dessus dans lequel A représente une liaison covalente ou un groupement divalent hydrocarboné comportant de 1 à 1800 atomes de carbone, de préférence de 2 à 300 atomes de carbone. Plus préférentiellement, A représente un groupement divalent hydrocarboné comportant de 2 à 100 atomes de carbone, de préférence de 2 à 50 atomes de carbone. Plus préférentiellement encore, A représente un groupement divalent hydrocarboné comportant de 3 à 50 atomes de carbone, de préférence de 5 à 50 atomes de carbone. De manière encore plus préférentielle, A représente un groupement divalent hydrocarboné comportant de 8 à 50 atomes de carbone, de préférence de 10 à 40 atomes de carbone.

Préférentiellement également, l'invention a pour objet un pneumatique tel que défini ci-dessus dans lequel A est un groupement divalent de type aliphatique, ou aromatique ou un groupement comportant au moins une partie aliphatique et une partie aromatique. De préférence, A est un groupement divalent de type aliphatique, ou un groupement comportant au moins une partie aliphatique et une partie aromatique. De préférence également, A est un groupement divalent de type aliphatique saturé ou insaturé. Très préférentiellement, A est un groupement alkylène.

De préférence, l'invention a pour objet un pneumatique tel que défini ci-dessus dans lequel A est interrompu par au moins un hétéroatome choisi parmi l'oxygène, l'azote et le soufre, de préférence l'oxygène.

De préférence également, l'invention a pour objet un pneumatique tel que défini ci-dessus dans lequel A est substitué par au moins un radical choisi parmi les radicaux alkyle, cycloalkylalkyle, aryle, aralkyle, hydroxyle, alkoxy, amino et carbonyle. Préférentiellement, A est substitué par une ou plusieurs fonctions acides carboxyliques et/ou par un ou plusieurs radicaux hydrocarbonés choisi parmi les radicaux alkyle, cycloalkyle, cycloalkylalkyle, aryle, aralkyle, eux-même substitués par une ou plusieurs fonctions acides carboxyliques. Alternativement et préférentiellement également, A ne comporte pas d'autre fonction acide carboxylique.

Préférentiellement, l'invention a pour objet un pneumatique tel que défini ci-dessus dans lequel le taux de poly-acide est compris dans un domaine allant de 0,2 à 100 pce, de préférence de 0,2 à 50 pce. Plus préférentiellement, le taux de poly-acide est compris dans un domaine allant de 0,4 à 27 pce, de préférence de 0,9 à 20 pce.

Préférentiellement, l'invention a pour objet un pneumatique tel que défini ci-dessus dans lequel,
- R₁ représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué,
- R₂ représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peuvent éventuellement être interrompus par un ou plusieurs hétéroatomes et/ou substitué,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués, ou encore R₃ et R₄ forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

De préférence, l'invention a pour objet un pneumatique tel que défini ci-dessus dans lequel R₁ représente un groupement choisis parmi les groupements alkyles ayant de 2 à 12 atomes de carbone, ou aralkyles ayant de 7 à 13 atomes de carbone; groupements qui peuvent éventuellement être substitués.

De préférence également, l'invention a pour objet un pneumatique tel que défini ci-dessus dans lequel R₁ représente un groupement aralkyle ayant de 7 à 13 atomes de carbone éventuellement substitué et R₂ représente un groupement alkyle ayant de 1 à 12 atomes de carbone. Plus préférentiellement, R₁ représente un groupement aralkyle ayant de 7 à 9 atomes de carbone éventuellement substitué et R₂ représente un groupement alkyle ayant de 1 à 4 atomes de carbone.

De manière préférentielle, l'invention a pour objet un pneumatique tel que défini ci-dessus dans lequel R₃ et R₄ représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués.

De manière préférentielle également, l'invention a pour objet un pneumatique tel que défini ci-dessus dans lequel R₃ et R₄ représentent forment avec les atomes de carbone du cycle imidazole auxquels ils se rattachent, un cycle phényle, cyclohexene, ou cyclopentene.

Préférentiellement, l'invention a pour objet un pneumatique tel que défini ci-dessus dans lequel le taux d'imidazole est compris dans un domaine allant de 0,5 à 4 équivalents molaires, et de préférence de 0,5 à 3 équivalents molaires, par rapport aux fonctions acides carboxyliques présentes sur le poly-acide carboxylique de formule générale (I). Plus préférentiellement, le taux d'imidazole est compris dans un domaine allant de 0,5 à 2,5 équivalents molaires, et de préférence de 0,5 à 2 équivalents molaires, et de manière encore plus préférentielle de 0,5 à 1,5 équivalents molaires par rapport aux fonctions acides carboxyliques présentes sur le poly-acide carboxylique de formule générale (I).

De préférence, l'invention a pour objet un pneumatique tel que défini ci-dessus dans lequel l'élastomère diénique majoritaire comprenant des fonctions époxydes est un élastomère diénique époxydé choisi dans le groupe constitué par les caoutchoucs naturels époxydés, les polyisoprènes de synthèse époxydés et les mélanges de ces derniers.

Préférentiellement, l'invention a pour objet un pneumatique tel que défini ci-dessus dans lequel l'élastomère diénique majoritaire comprenant des fonctions époxydes représente de 30 à 100 pce, préférentiellement de 50 à 100 pce, en coupage avec 0 à 70 pce, de préférence de 0 à 50 pce, d'un ou plusieurs élastomères non époxydés minoritaires. Plus préférentiellement, l'élastomère diénique majoritaire comprenant des fonctions époxydes, représente la totalité des 100 pce d'élastomère.

De préférence, l'invention a pour objet un pneumatique tel que défini ci-dessus dans lequel la charge renforçante comporte du noir de carbone, de la silice ou un mélange de noir de carbone et de silice. Préférentiellement, l'invention a pour objet un pneumatique tel que défini ci-dessus dans lequel le taux de charge renforçante est comprise entre 20 et 200 pce.

Les pneumatiques conformes à l'invention sont notamment destinés à des véhicules tourisme comme à des véhicules deux roues (moto, vélo), véhicules industriels choisis parmi camionnettes, "Poids-lourd" - i.e., métro, bus, engins de transport routier (camions, tracteurs, remorques), véhicules hors-la-route, engins agricoles ou de génie civil, avions, autres véhicules de transport ou de manutention.

L'invention ainsi que ses avantages seront aisément compris à la lumière de la description et des exemples de réalisation qui suivent.

### I. Tests

Les compositions de caoutchouc sont caractérisées après cuisson, comme indiqué ci-après.

### 1.1. Essais de traction

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 50% et 100% d'allongement notés respectivement MSA50 et MSA100.

Les contraintes à la rupture (en MPa) et les allongements à la rupture (en %) sont mesurés à 23°C ± 2°C, selon la norme NF T 46-002.

### I.2. Propriétés dynamiques

Les propriétés dynamiques sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente. On effectue un balayage en amplitude de déformation de 0,1 à 100% (cycle aller), puis de 100% à 0,1% (cycle retour). Le résultat exploité est le facteur de perte tan(δ). Pour le cycle retour, on indique la valeur maximale de tan(δ) observée, noté tan(δ)max à 23°C.

On rappelle que, de manière bien connue de l'homme du métier, la valeur de tan(δ)max à 23°C est représentative de l'hystérèse du matériau donc de la résistance au roulement : plus tan(δ)max à 23°C est faible, plus la résistance au roulement est réduite.

### II. Composition des pneumatiques de l'invention

Le pneumatique selon l'invention comporte une composition de caoutchouc à base d'au moins un élastomère comprenant des fonctions époxydes, au moins une charge renforçante, et un système de réticulation comprenant un poly-acide carboxylique de formule générale (I) et un imidazole de formule générale (II).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression "équivalent molaire", bien connue de l'homme du métier, il faut entendre le quotient entre le nombre de moles du composé concerné et le nombre de moles du composé de référence. Ainsi, 2 équivalents d'un composé B par rapport à un composé A représentent 2 moles du composé B lorsqu'1 mole du composé A est utilisée.

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères.

Au contraire, un composé « minoritaire » est un composé qui ne représente pas la fraction massique la plus grande parmi les composés du même type.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### 11.1. Elastomère diénique comprenant des fonctions époxydes (ou élastomère diénique époxydé)

Par élastomère ou caoutchouc (les deux termes étant de manière connue synonymes et interchangeables) du type diénique époxydé, on rappelle que doit être entendu un élastomère qui est issu au moins en partie (i.e. un homopolymère ou un copolymère) de monomères diènes (monomères porteurs de deux doubles liaisons carbone-carbone, conjuguées ou non), lequel est fonctionnalisé, c'est-à-dire qu'il est porteur de groupes fonctionnels époxydes.

Une première caractéristique des élastomères diéniques époxydés, est donc d'être des élastomères diéniques. Ces élastomères diéniques, par définition non thermoplastiques dans la présente demande, présentant une Tg dans la très grande majorité des cas qui est négative (c'est-à-dire inférieure à 0°C), peuvent être classés de manière connue en deux catégories : ceux dits "essentiellement insaturés" et ceux dits "essentiellement saturés". Les caoutchoucs butyl, comme par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères diéniques ci-dessus peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse de -40°C à - 80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans - 1,4 de la partie isoprénique comprise entre 10% et 50%, et plus généralement tout copolymère butadiène-styrène-isoprène ayant une Tg comprise entre -20°C et 70°C.

La Tg des polymères thermoplastiques et des élastomères diéniques décrits ci-dessus est mesurée de manière connue par DSC (Differential Scanning Calorimetry), par exemple et sauf indications différentes spécifiées dans la présente demande, selon la norme ASTM D3418 de 1999.

Une deuxième caractéristique essentielle de l'élastomère diénique époxydé utile aux besoins de l'invention, est qu'il est fonctionnalisé, porteur de groupes fonctionnels époxydes.

De tels élastomères diéniques époxydés et leurs procédés d'obtention sont bien connus de l'homme du métier et disponibles commercialement. Des élastomères diéniques porteurs de groupes époxydes ont été décrits par exemple dans US 2003/120007 ou EP 0763564, US 6903165 ou EP 1403287.

Préférentiellement, l'élastomère diénique époxydé est choisi dans le groupe constitué par les caoutchoucs naturels (NR) époxydés (en abrégé "ENR"), les polyisoprènes (IR) de synthèse époxydés, les polybutadiènes (BR) époxydés ayant préférentiellement un taux de liaisons cis-1,4 supérieur à 90%, les copolymères de butadiène-styrène (SBR) époxydés et les mélanges de ces élastomères.

Les caoutchoucs naturels époxydés (en abrégé "ENR"), par exemple, peuvent être obtenus de manière connue par époxydation du caoutchouc naturel, par exemple par des procédés à base de chlorohydrine ou de bromohydrine ou des procédés à base de peroxydes d'hydrogène, d'alkyl hydroperoxydes ou de peracides (tel que acide peracétique ou acide performique) ; de tels ENR sont par exemple vendus sous les dénominations "ENR-25" et "ENR-50" (taux d'époxydation respectifs de 25% et 50%) par la société Guthrie Polymer. Les BR époxydés sont eux aussi bien connus, vendus par exemple par la société Sartomer sous la dénomination "Poly Bd" (par exemple "Poly Bd 605E"). Les SBR époxydés peuvent être préparés par des techniques d'époxydation bien connues de l'homme du métier.

Le taux (% molaire) d'époxydation des élastomères diéniques époxydés précédemment décrits peut varier dans une large part selon les modes de réalisation particuliers de l'invention, de préférence dans un domaine de 0,2% à 80%, préférentiellement dans un domaine de 2% à 50%, plus préférentiellement dans un domaine de 2,5% à 30%. Quand le taux d'époxydation est inférieur à 0,2%, l'effet technique visé risque d'être insuffisant tandis qu'au-delà de 80%, la masse moléculaire du polymère diminue fortement. Pour toutes ces raisons, le taux de fonctionnalisation, notamment d'époxydation, est plus préférentiellement compris dans un domaine de 2,5% à 30%.

Les élastomères diéniques époxydés précédemment décrits sont de manière connue solides à température ambiante (20°C) ; on entend par solide toute substance n'ayant pas la capacité de prendre à terme, au plus tard au bout de 24 heures, sous le seul effet de la gravité et à température ambiante (20°C), la forme du récipient qui la contient. La composition de caoutchouc selon l'invention comprend un élastomère diénique.

Les compositions des pneumatiques de l'invention peuvent contenir un seul élastomère diénique époxydé ou un mélange de plusieurs élastomères diéniques époxydés (qu'on notera alors au singulier comme étant « l'élastomère diénique époxydé » pour représenter la somme des élastomères époxydés de la composition), l'élastomère diénique époxydé pouvant être utilisé en association avec tout type d'élastomère non époxydé, par exemple diénique, voire avec des élastomères autres que des élastomères diéniques.

L'élastomère diénique époxydé est majoritaire dans la composition de caoutchouc du pneumatique de l'invention, c'est-à-dire qu'il est soit le seul élastomère (ou les seuls élastomères si les élastomères sont un mélange d'élastomères diéniques époxydés), soit il est celui qui représente la plus grande masse, parmi les élastomères de la composition.

De préférence, l'élastomère diénique majoritaire est choisi dans le groupe constitué par les caoutchoucs naturels époxydés, les polyisoprènes de synthèse époxydés et les mélanges de ces derniers.

Selon un mode préférentiel de réalisation de l'invention, la composition de caoutchouc comprend par exemple de 30 à 100 pce, en particulier de 50 à 100 pce, d'un élastomère diénique époxydé majoritaire en coupage avec 0 à 70 pce, en particulier de 0 à 50 pce, d'un ou plusieurs élastomères non époxydés minoritaires.

Selon un autre mode préférentiel de réalisation de l'invention, la composition comporte pour la totalité des 100 pce d'élastomère, un ou plusieurs élastomères diéniques époxydés.

### II.2. Charge renforçante

On peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115,

N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge organique, particulièrement de noir de carbone, et optionnellement de la silice; la silice, lorsqu'elle est présente, est utilisée de préférence à un taux inférieur à 20 pce, plus préférentiellement inférieur à 10 pce (par exemple entre 0,1 et 10 pce). Ce mode de réalisation préférentiel est particulièrement préféré lorsque l'élastomère majoritaire de la composition est un caoutchouc isoprénique époxydé, plus particulièrement du caoutchouc naturel époxydé.

Alternativement, selon un autre mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce). Ce mode de réalisation préférentiel est également particulièrement préféré lorsque l'élastomère majoritaire de la composition est un caoutchouc isoprénique époxydé, plus particulièrement du caoutchouc naturel époxydé.

Pour coupler la charge inorganique renforçante à l'élastomère diénique, on peut utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On peut utiliser notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:

(I) Z - A - Sx - A - Z ,

dans laquelle:
- x est un entier de 2 à 8 (de préférence de 2 à 5) ;
- A est un radical hydrocarboné divalent (de préférence des groupements alkylène en C1-C18 ou des groupements arylène en C6-C12, plus particulièrement des alkylènes en C1-C10, notamment en C1-C4, en particulier le propylène) ;
- Z répond à l'une des formules ci-après: 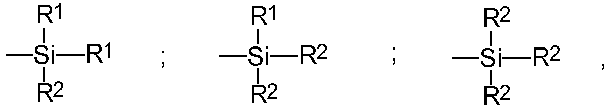 dans lesquelles:
   - les radicaux R1, substitués ou non substitués, identiques ou différents entre eux, représentent un groupe alkyle en C1-C18, cycloalkyle en C5-C18 ou aryle en C6-C18 (de préférence des groupes alkyle en C1-C6, cyclohexyle ou phényle, notamment des groupes alkyle en C1-C4, plus particulièrement le méthyle et/ou l'éthyle).
   - les radicaux R2, substitués ou non substitués, identiques ou différents entre eux, représentent un groupe alkoxyle en C1-C18 ou cycloalkoxyle en C5-C18 (de préférence un groupe choisi parmi alkoxyles en C1-C8 et cycloalkoxyles en C5-C8, plus préférentiellement encore un groupe choisi parmi alkoxyles en C1-C4, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O₃Si(CH₂)S]₂. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R2 = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 12 pce, plus préférentiellement entre 4 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.3. Système de réticulation

A l'élastomère diénique époxydé et à la charge renforçante précédemment décrits est associé un système de réticulation, apte à la réticuler ou durcir la composition du pneumatique selon l'invention. Ce système de réticulation comprend un (c'est-à-dire au moins un) poly-acide carboxylique de formule générale (I) et un (c'est-à-dire au moins un) imidazole de formule générale (II).

### II.3.a. Poly-acide

Le poly-acide utile pour les besoins de l'invention est un poly-acide carboxylique de formule générale (I) 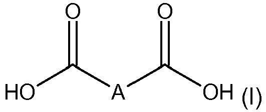 dans laquelle A représente une liaison covalente ou un groupement hydrocarboné comportant au moins 1 atomes de carbone, éventuellement substitué et éventuellement interrompu par un ou plusieurs hétéroatomes.

De préférence dans le poly-acide de formule générale (I), A représente une liaison covalente ou un groupement divalent hydrocarboné comportant de 1 à 1800 atomes de carbone, préférentiellement de 2 à 300 atomes de carbone, plus préférentiellement de 2 à 100 atomes de carbone, et de manière très préférentielle de 2 à 50 atomes de carbone. Au-dessus de 1800 atomes de carbone, le poly-acide est un agent de réticulation moins performant. Ainsi, A représente de préférence un groupement divalent hydrocarboné comportant de 3 à 50 atomes de carbone, préférentiellement de 5 à 50 atomes de carbone, plus préférentiellement de 8 à 50 atomes de carbone, et encore plus préférentiellement de 10 à 40 atomes de carbone.

Préférentiellement dans le poly-acide de formule générale (I), A peut être un groupement divalent de type aliphatique, ou aromatique ou un groupement comportant au moins une partie aliphatique et une partie aromatique. De préférence, A peut être un groupement divalent de type aliphatique, ou un groupement comportant au moins une partie aliphatique et une partie aromatique. Alternativement, et de préférence également, A peut être un groupement divalent de type aliphatique saturé ou insaturé, par exemple un groupement alkylène.

Le groupement A du poly-acide de formule générale (I) peut être interrompu par au moins un hétéroatome choisi parmi l'oxygène, l'azote et le soufre, de préférence l'oxygène.

Egalement, le groupement A du poly-acide de formule générale (I) peut être substitué par au moins un radical choisi parmi les radicaux alkyle, cycloalkylalkyle, aryle, aralkyle, hydroxyle, alkoxy, amino et carbonyle.

Le poly-acide de formule générale (I) peut comporter plus de deux fonctions acides carboxyliques, dans ce cas, le groupement A est substitué par une ou plusieurs fonctions acides carboxyliques et/ou par un ou plusieurs radicaux hydrocarbonés choisi parmi les radicaux alkyle, cycloalkyle, cycloalkylalkyle, aryle, aralkyle, eux-même substitués par une ou plusieurs fonctions acides carboxyliques.

Selon un mode préférentiel, le radical A ne comporte pas d'autre fonction acide carboxylique, le poly-acide est donc un diacide.

Le taux de poly-acide est préférentiellement compris dans un domaine allant de 0,2 à 100 pce, de préférence de 0,2 à 50 pce, plus préférentiellement de 0,4 à 27 pce, et plus préférentiellement encore de 0,9 à 20 pce. En dessous de 0,2 pce de poly-acide, l'effet de la réticulation n'est pas sensible tandis qu'au-delà de 100 pce de poly-acide, le poly-acide, agent de réticulation, devient majoritaire en poids par rapport à la matrice élastomérique.

Les poly-acides utiles pour les besoin de l'invention sont soit disponibles dans le commerce, soit facilement préparés par l'homme de l'art selon des techniques bien connues telles que les voies chimiques décrites par exemple dans le document US 7534917 ainsi que dans les références que ce document cite, ou les voies biologiques, telles que la fermentation décrite dans le document US3843466.

Par exemple, à titre de poly-acides disponibles dans le commerce et utiles aux besoins de l'invention, on peut citer : l'acide oxalique, l'acide succinique, l'acide adipique, l'acide sébacique, l'acide dodécanedioïque, l'acide terephthalique ou encore des polyacides tels que l'acide trimésique ou l'acide 3,4-bis(carboxyméthyl)cyclopentanecarboxylique.

### II.3.b. Imidazole

L'imidazole utile au système de réticulation du pneumatique de l'invention est un imidazole de formule générale (II) 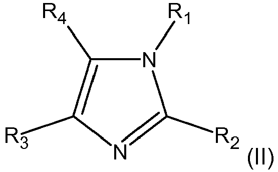 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné,
- ou encore R₃ et R₄ forment ensemble avec les atomes de carbone du cycle imidazole auxquels ils se rattachent, un cycle.

De préférence, l'imidazole de formule générale (II) possèdent des groupements tels que :
- R₁ représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué,
- R₂ représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peuvent éventuellement être interrompus par un ou plusieurs hétéroatomes et/ou substitué,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués, ou encore R₃ et R₄ forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

Préférentiellement, R₁ représente un groupement choisis parmi les groupements alkyles ayant de 2 à 12 atomes de carbone, ou aralkyles ayant de 7 à 13 atomes de carbone; groupements qui peuvent éventuellement être substitués. Plus préférentiellement, R₁ représente un groupement aralkyle ayant de 7 à 13 atomes de carbone éventuellement substitué et R₂ représente un groupement alkyle ayant de 1 à 12 atomes de carbone. Encore plus préférentiellement, R₁ représente un groupement aralkyle ayant de 7 à 9 atomes de carbone éventuellement substitué et R₂ représente un groupement alkyle ayant de 1 à 4 atomes de carbone.

De préférence, R₃ et R₄ représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués. Alternativement et préférentiellement également, R₃ et R₄ représentent forment avec les atomes de carbone du cycle imidazole auxquels ils se rattachent, un cycle phényle, cyclohexene, ou cyclopentene.

Pour un bon fonctionnement de l'invention, le taux d'imidazole est préférentiellement compris dans un domaine allant de 0,5 à 4 équivalents molaires, et de préférence de 0,5 à 3 équivalents molaires, par rapport aux fonctions acides carboxyliques présentes sur le poly-acide carboxylique de formule générale (I). En dessous de 0,5 équivalents molaires, on n'observe pas d'effet du coagent imidazole par rapport à la situation où le poly-acide est utilisé seul tandis qu'au-dessus d'une valeur de 4 équivalents molaires, on n'observe pas de bénéfice supplémentaire par rapport à des taux plus faibles. Ainsi, le taux d'imidazole est plus préférentiellement compris dans un domaine allant de 0,5 à 2,5 équivalents molaires, et de préférence de 0,5 à 2 équivalents molaires, et de manière encore plus préférentielle de 0,5 à 1,5 équivalents molaires par rapport aux fonctions acides carboxyliques présentes sur le poly-acide carboxylique de formule générale (I).

Les imidazoles utiles pour les besoin de l'invention sont soit disponibles dans le commerce, soit facilement préparés par l'homme de l'art selon des techniques bien connues telles que décrites par exemple dans les documents JP2012211122, JP2007269658 ou encore dans Science of Synthesis 2002, 12, 325-528.

Par exemple, à titre d'imidazoles disponibles dans le commerce et utiles aux besoins de l'invention, on peut citer le 1,2-diméthylimidazole, le 1-décyl-2-méthylimidazole, ou le 1-benzyl-2-méthylimidazole.

### II.3.c. Poly-acide et imidazole

A l'évidence, et conformément à la définition de l'expression « à base de » pour la présente invention, une composition à base du poly-acide de formule générale (I) et de l'imidazole de formule générale (II) présentés ci-dessus pourrait être une composition dans laquelle ledit poly-acide et ledit imidazole auraient préalablement réagi ensemble pour former un sel entre une ou plusieurs fonctions acides du poly-acide et respectivement un ou plusieurs noyaux imidazoles.

### II.4. Additifs divers

Les compositions de caoutchouc des pneumatiques conformes à l'invention peuvent comporter également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, des agents anti-fatigue, des agents de réticulation autres que ceux précités, des résines renforçantes ou des agents plastifiants. De préférence, cet agent plastifiant est une résine hydrocarbonée solide (ou résine plastifiante), une huile d'extension (ou huile plastifiante), ou un mélange des deux.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

De manière préférentielle, les compositions des pneumatiques de l'invention sont dépourvues de système de réticulation autre que celui décrit précédemment, et qui comporte au moins un poly-acide et au moins un imidazole. Dit autrement, le système de réticulation à base d'au moins un poly-acide et au moins un imidazole est préférentiellement le seul système de réticulation dans la composition du pneumatique de l'invention. De préférence, les compositions des pneumatiques de l'invention sont dépourvues de système de vulcanisation, ou en contiennent moins de 1 pce, de préférence moins de 0,5 pce et plus préférentiellement moins de 0,2 pce. Ainsi, la composition du pneumatique selon l'invention, est préférentiellement dépourvue de soufre moléculaire ou en contient moins de 1 pce, de préférence moins de 0,5 pce et plus préférentiellement moins de 0,2 pce. De même la composition est préférentiellement dépourvue de tout accélérateur de vulcanisation, tels qu'ils sont connus de l'homme du métier, ou en contient moins de 1 pce, de préférence moins de 0,5 pce et plus préférentiellement moins de 0,2 pce.

### II.5. Préparation des compositions de caoutchouc

Les compositions utilisées dans les pneumatiques de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle peut être incorporé le système de réticulation.

De préférence, pour la mise en oeuvre de l'invention, tous les constituants de la composition sont introduits au mélangeur interne, de sorte que l'on peut s'affranchir de l'incorporation d'un système de vulcanisation lors de la phase dite productive ci-dessus. En effet, le système de réticulation des compositions de l'invention permet de travailler le mélange à haute température, ce qui constitue un avantage majeur lors de la préparation des compositions de l'invention par rapport à la préparation des compositions comprenant un système de vulcanisation conventionnel.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication du pneumatique de l'invention.

### 11.6. Pneumatique de l'invention

La composition de caoutchouc du pneumatique selon l'invention peut être utilisée dans différentes parties dudit pneumatique, notamment dans le sommet, la zone du bourrelet, la zone du flanc et la bande de roulement (notamment dans la sous-couche de la bande de roulement).

Selon un mode préférentiel de réalisation de l'invention, la composition de caoutchouc précédemment décrite peut être utilisée dans le pneumatique comme une couche élastomère dans au moins une partie du pneumatique.

Par « couche » élastomère, on entend tout élément tridimensionnel, en composition de caoutchouc (ou « élastomère », les deux étant considérés comme synonymes), de forme et d'épaisseur quelconques, notamment feuille, bande, ou autre élément de section droite quelconque, par exemple rectangulaire ou triangulaire.

Tout d'abord, la couche élastomère peut être utilisée en sous couche de bande de roulement disposée dans le sommet du pneumatique, entre d'une part la bande de roulement, i.e., la portion destinée à entrer au contact de la route lors du roulage, et d'autre part la ceinture renforçant ledit sommet. L'épaisseur de cette couche élastomère est de préférence comprise dans un domaine allant de 0,5 à 10 mm, notamment dans un domaine de 1 à 5 mm.

Selon un autre mode préférentiel de réalisation de l'invention, la composition de caoutchouc selon l'invention peut être utilisée pour former une couche élastomère, disposée dans la région de la zone du bourrelet du pneumatique, radialement entre la nappe carcasse, la tringle et le retournement de la nappe carcasse.

Egalement, la composition selon l'invention peut être utilisée dans les nappes du sommet (ceinture de pneumatique) ou dans la zone entre les extrémités des nappes du sommet et la nappe carcasse.

Un autre mode préférentiel de réalisation de l'invention peut être l'utilisation de la composition selon l'invention pour former une couche élastomère disposée dans la zone du flanc du pneumatique.

Alternativement, la composition de l'invention peut avantageusement être utilisée dans la bande roulement du pneumatique.

### III. EXEMPLES DE REALISATION DE L'INVENTION

### 111.1. Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique époxydé, la charge renforçante, le poly-acide, l'imidazole et les autres additifs. On conduit alors un travail thermomécanique (phase non-productive) en une étape, qui dure au total environ 3 à 4 min, jusqu'à atteindre une température maximale de « tombée » de 180°C.

On récupère le mélange ainsi obtenu, on le refroidit puis les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

### 111.2. Essais de compositions de caoutchouc

Cet essai illustre des compositions de caoutchouc qui peuvent être utilisées en particulier en bande roulement du pneumatique de l'invention. Ces compositions présentent une facilité de préparation et une simplicité supérieure à une composition de caoutchouc conventionnelle (vulcanisée au soufre), tout en améliorant également l'hystérèse des compositions par rapport aux compositions vulcanisées au soufre.

Pour cela, des compositions de caoutchouc ont été préparées comme indiqué précédemment, dont certaines conformes à l'invention (C3 et C4) et certaines non conformes (témoins C1 et C2) comme indiqué au tableau 1.

Les compositions C1 et C2 sont des compositions vulcanisées (c'est-à-dire réticulées par un système de vulcanisation à base de soufre, conventionnel pour la cuisson des pneumatiques) tandis que les compositions C3 et C4 sont des compositions réticulées par un poly-acide et un imidazole, selon l'invention.

Les propriétés des compositions C1 à C4 ont été mesurées comme indiqué précédemment et les résultats sont indiqués dans le tableau 2.

On note dans les compositions de l'invention une plus grande simplicité du mélange, avec moins d'ingrédients que dans les compositions témoins. Par ailleurs, on peut noter que le remplacement système de vulcanisation classique par un système de réticulation poly-acide et imidazole, tel que prescrit pour l'invention permet d'obtenir une amélioration de l'hystérèse du mélange, avec un compromis rigidité / élongation rupture similaire au témoin vulcanisé.

**Tableau 1**

| | ***C1*** | ***C2*** | ***C3*** | ***C4*** |
|---|---|---|---|---|
| *ENR25 (1)* | 100 | 100 | 100 | 100 |
| *Noir de carbone (2)* | 54 | | 54 | - |
| *Silice (3)* | - | 45 | - | 45 |
| *Silane (4)* | - | 4,5 | - | 4,5 |
| *6PPD (5)* | 3 | 3 | 3 | 3 |
| *Poly-acide (6)* | - | - | 1,1 | 1,1 |
| *Imidazole (7)* | - | - | 1,65 | 1,65 |
| *Soufre* | 1,2 | 1,3 | - | - |
| *Accélérateur (8)* | 1,2 | 1,56 | - | - |
| *ZnO (9)* | 3 | 2,7 | - | - |
| *Acide stéarique (10)* | 1,5 | 2,5 | - | - |

(1) Caoutchouc Naturel Epoxydé, « ENR-25 », de la société Guthrie Polymer ;
(2) Noir de carbone N234 (dénomination selon la norme ASTM D-1765) ;
(3) Silice 160 MP, « Zeosil 1165MP » de la société Rhodia ;
(4) « Dynasylan Octeo », de la société Degussa ;
(5) N-1,3-diméthylbutyl-N-phénylparaphénylènediamine (Santoflex 6-PPD de la société Flexsys) ;
(6) Acide dodécane dioïque, CAS 693-23-2, de la société Sigma-Aldrich ;
(7) 1-benzyl-2-méthylimidazole, CAS = 13750-62-4 de la société Sigma-Aldrich ;
(8) N-cyclohexyl-2-benzothiazyle sulfénamide (Santocure CBS de la société Flexsys) ;
(9) Oxyde de zinc (grade industriel - société Umicore) ;
(10) Stéarine (« Pristerene 4931 » de la société Uniqema).

**Tableau 2**

| | ***C1*** | ***C2*** | ***C3*** | ***C4*** |
|---|---|---|---|---|
| *MSA50 (MPa)* | 3,38 | 2,24 | 2,78 | 2,45 |
| *MSA100 (MPa)* | 2,95 | 1,96 | 2,50 | 2,14 |
| *Elongation rupture* (%) | 333 | 445 | 357 | 480 |
| *tandₘₐₓ 23°C retour* | 0,408 | 0,224 | 0,362 | 0,210 |

## Revendications

1. Pneumatique comportant une composition de caoutchouc à base d'au moins un élastomère diénique majoritaire comprenant des fonctions époxydes, au moins une charge renforçante, et un système de réticulation comprenant un poly-acide carboxylique de formule générale (I) 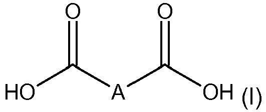 dans laquelle A représente une liaison covalente ou un groupement hydrocarboné comportant au moins 1 atome de carbone, éventuellement substitué et éventuellement interrompu par un ou plusieurs hétéroatomes,
et un imidazole de formule générale (II) 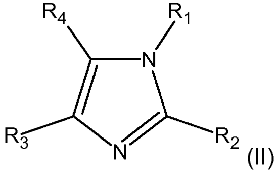 dans laquelle,
- R₁ représente un groupement hydrocarboné ou un atome d'hydrogène,
- R₂ représente un groupement hydrocarboné,
- R₃ et R₄ représentent indépendamment l'un de l'autre, un atome d'hydrogène ou un groupement hydrocarboné,
- ou encore R₃ et R₄ forment ensemble, avec les atomes de carbone du cycle imidazole auxquels ils se rattachent, un cycle.

2. Pneumatique comportant une composition de caoutchouc selon la revendication 1 dans lequel A représente une liaison covalente ou un groupement divalent hydrocarboné comportant de 1 à 1800 atomes de carbone, de préférence de 2 à 300 atomes de carbone.

3. Pneumatique comportant une composition de caoutchouc selon l'une quelconque des revendications 1 ou 2 dans lequel A est un groupement divalent de type aliphatique, ou aromatique ou un groupement comportant au moins une partie aliphatique et une partie aromatique.

4. Pneumatique comportant une composition de caoutchouc selon l'une quelconque des revendications 1 à 3 dans lequel A est un groupement alkylène.

5. Pneumatique comportant une composition selon l'une quelconque des revendications 1 à 4, dans lequel A est substitué par une ou plusieurs fonctions acides carboxyliques et/ou par un ou plusieurs radicaux hydrocarbonés choisi parmi les radicaux alkyle, cycloalkyle, cycloalkylalkyle, aryle, aralkyle, eux-même substitués par une ou plusieurs fonctions acides carboxyliques.

6. Pneumatique comportant une composition selon l'une quelconque des revendications 1 à 4, dans lequel le radical A ne comporte pas d'autre fonction acide carboxylique.

7. Pneumatique comportant une composition de caoutchouc selon l'une quelconque des revendications précédentes, dans lequel le taux de poly-acide est compris dans un domaine allant de 0,2 à 100 pce, de préférence de 0,2 à 50 pce.

8. Pneumatique comportant une composition de caoutchouc selon l'une quelconque des revendications précédente, dans lequel,
- R₁ représente un atome d'hydrogène ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué,
- R₂ représente un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peuvent éventuellement être interrompus par un ou plusieurs hétéroatomes et/ou substitué,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués, ou encore R₃ et R₄ forment ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.

9. Pneumatique comportant une composition de caoutchouc selon l'une quelconque des revendications 1 à 8, dans lequel R₁ représente un groupement choisis parmi les groupements alkyles ayant de 2 à 12 atomes de carbone, ou aralkyles ayant de 7 à 13 atomes de carbone; groupements qui peuvent éventuellement être substitués.

10. Pneumatique comportant une composition de caoutchouc selon l'une quelconque des revendications 1 à 9, dans lequel R₁ représente un groupement aralkyle ayant de 7 à 13 atomes de carbone éventuellement substitué et R₂ représente un groupement alkyle ayant de 1 à 12 atomes de carbone.

11. Pneumatique comportant une composition de caoutchouc selon l'une des revendications précédentes, dans lequel R₃ et R₄ représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués.

12. Pneumatique comportant une composition de caoutchouc selon l'une des revendications 1 à 10, dans lequel R₃ et R₄ représentent forment avec les atomes de carbone du cycle imidazole auxquels ils se rattachent, un cycle phényle, cyclohexene, ou cyclopentene.

13. Pneumatique comportant une composition de caoutchouc selon l'une quelconque des revendications précédentes, dans lequel le taux d'imidazole est compris dans un domaine allant de 0,5 à 4 équivalents molaires, et de préférence de 0,5 à 3 équivalents molaires, par rapport aux fonctions acides carboxyliques présentes sur le poly-acide carboxylique de formule générale (I).

14. Pneumatique comportant une composition de caoutchouc selon l'une quelconque des revendications précédentes, dans lequel l'élastomère diénique majoritaire comprenant des fonctions époxydes est un élastomère diénique époxydé choisi dans le groupe constitué par les caoutchoucs naturels époxydés, les polyisoprènes de synthèse époxydés et les mélanges de ces derniers.

15. Pneumatique comportant une composition de caoutchouc selon l'une quelconque des revendications précédentes, dans lequel l'élastomère diénique majoritaire comprenant des fonctions époxydes représente de 30 à 100 pce, préférentiellement de 50 à 100 pce, en coupage avec 0 à 70 pce, de préférence de 0 à 50 pce, d'un ou plusieurs élastomères non époxydés minoritaires.

## Patentansprüche

1. Reifen umfassend eine Kautschukzusammensetzung auf Basis von mindestens einem hauptsächlichen Dienelastomer mit Epoxidfunktionen, mindestens einem verstärkenden Füllstoff und einem Vernetzungssystem, das eine Polycarbonsäure der allgemeinen Formel (I) 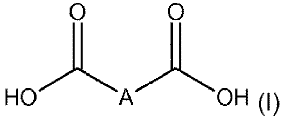 wobei A für eine kovalente Bindung oder eine Kohlenwasserstoffgruppe mit mindestens 1 Kohlenstoffatom, die gegebenenfalls substituiert und gegebenenfalls durch ein oder mehrere Heteroatome unterbrochen ist, steht,
und ein Imidazol der allgemeinen Formel (II) 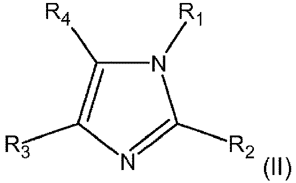 wobei
- R₁ für eine Kohlenwasserstoffgruppe oder ein Wasserstoffatom steht,
- R₂ für eine Kohlenwasserstoffgruppe steht,
- R₃ und R₄ unabhängig voneinander für ein Wasserstoffatom oder eine Kohlenwasserstoffgruppe stehen,
- oder auch R₃ und R₄ zusammen mit den Kohlenstoffatomen des Imidazolrings, an die sie gebunden sind, einen Ring bilden,
umfasst.

2. Reifen umfassend eine Kautschukzusammensetzung nach Anspruch 1, wobei A für eine kovalente Bindung oder eine zweiwertige Kohlenwasserstoffgruppe mit 1 bis 1800 Kohlenstoffatomen, vorzugsweise 2 bis 300 Kohlenstoffatomen, steht.

3. Reifen umfassend eine Kautschukzusammensetzung nach einem der Ansprüche 1 oder 2, wobei A eine zweiwertige Gruppe vom aliphatischen oder aromatischen Typ oder eine Gruppe mit mindestens einem aliphatischen Teil und einem aromatischen Teil ist.

4. Reifen umfassend eine Kautschukzusammensetzung nach einem der Ansprüche 1 bis 3, wobei A eine Alkylengruppe ist.

5. Reifen umfassend eine Zusammensetzung nach einem der Ansprüche 1 bis 4, wobei A durch eine oder mehrere Carbonsäurefunktionen und/oder durch einen oder mehrere Kohlenwasserstoffreste, die aus Alkyl-, Cycloalkyl-, Cycloalkylalkyl-, Aryl- und Aralkylresten, die selbst durch eine oder mehrere Carbonsäurefunktionen substituiert sind, ausgewählt sind, substituiert ist.

6. Reifen umfassend eine Zusammensetzung nach einem der Ansprüche 1 bis 4, wobei der Rest A keine andere Carbonsäurefunktion umfasst.

7. Reifen umfassend eine Kautschukzusammensetzung nach einem der vorhergehenden Ansprüche, wobei der Polysäuregehalt in einem Bereich von 0,2 bis 100 phe, vorzugsweise von 0,2 bis 50 phe, liegt.

8. Reifen umfassend eine Kautschukzusammensetzung nach einem der vorhergehenden Ansprüche, wobei
- R₁ für ein Wasserstoffatom oder eine Alkylgruppe mit 1 bis 20 Kohlenstoffatomen, eine Cycloalkylgruppe mit 5 bis 24 Kohlenstoffatomen, eine Arylgruppe mit 6 bis 30 Kohlenstoffatomen oder eine Aralkylgruppe mit 7 bis 25 Kohlenstoffatomen steht, wobei die Gruppe gegebenenfalls durch ein oder mehrere Heteroatome unterbrochen und/oder substituiert sein kann,
- R₂ für eine Alkylgruppe mit 1 bis 20 Kohlenstoffatomen, eine Cycloalkylgruppe mit 5 bis 24 Kohlenstoffatomen, eine Arylgruppe mit 6 bis 30 Kohlenstoffatomen oder eine Aralkylgruppe mit 7 bis 25 Kohlenstoffatomen steht, wobei die Gruppe gegebenenfalls durch ein oder mehrere Heteroatome unterbrochen und/oder substituiert sein kann,
- R₃ und R₄ unabhängig für gleiche oder verschiedene Gruppen stehen, die aus Wasserstoff oder Alkylgruppen mit 1 bis 20 Kohlenstoffatomen, Cycloalkylgruppen mit 5 bis 24 Kohlenstoffatomen, Arylgruppen mit 6 bis 30 Kohlenstoffatomen oder Aralkylgruppen mit 7 bis 25 Kohlenstoffatomen ausgewählt sind, wobei die Gruppen gegebenenfalls durch Heteroatome unterbrochen und/oder substituiert sein können, oder auch R₃ und R₄ zusammen mit den Kohlenstoffatomen des Imidazolrings, an die sie gebunden sind, einen Ring bilden, der aus aromatischen, heteroaromatischen oder aliphatischen Ringen mit 5 bis 12 Kohlenstoffatomen, vorzugsweise 5 oder 6 Kohlenstoffatomen, ausgewählt ist.

9. Reifen umfassend eine Kautschukzusammensetzung nach einem der Ansprüche 1 bis 8, wobei R₁ für eine Gruppe steht, die aus Alkylgruppen mit 2 bis 12 Kohlenstoffatomen oder Aralkylgruppen mit 7 bis 13 Kohlenstoffatomen ausgewählt ist, wobei die Gruppen gegebenenfalls substituiert sein können.

10. Reifen umfassend eine Kautschukzusammensetzung nach einem der Ansprüche 1 bis 9, wobei R₁ für eine Aralkylgruppe mit 7 bis 13 Kohlenstoffatomen, die gegebenenfalls substituiert ist, steht und R₂ für eine Alkylgruppe mit 1 bis 12 Kohlenstoffatomen steht.

11. Reifen umfassend eine Kautschukzusammensetzung nach einem der vorhergehenden Ansprüche, wobei R₃ und R₄ unabhängig für gleiche oder verschiedene Gruppen stehen, die aus Wasserstoff oder Alkylgruppen mit 1 bis 12 Kohlenstoffatomen, Cycloalkylgruppen mit 5 bis 8 Kohlenstoffatomen, Arylgruppen mit 6 bis 24 Kohlenstoffatomen oder Aralkylgruppen mit 7 bis 13 Kohlenstoffatomen ausgewählt sind, wobei die Gruppen gegebenenfalls substituiert sein können.

12. Reifen umfassend eine Kautschukzusammensetzung nach einem der Ansprüche 1 bis 10, wobei R₃ und R₄ mit den Kohlenstoffatomen des Imidazolrings, an die sie gebunden sind, einen Phenyl-, Cyclohexen-oder Cyclopentenring bilden.

13. Reifen umfassend eine Kautschukzusammensetzung nach einem der vorhergehenden Ansprüche, wobei der Imidazolgehalt in einem Bereich von 0,5 bis 4 Moläquivalenten und vorzugsweise 0,5 bis 3 Moläquivalenten, bezogen auf die an der Polycarbonsäure der allgemeinen Formel (I) vorliegenden Carbonsäurefunktionen, liegt.

14. Reifen umfassend eine Kautschukzusammensetzung nach einem der vorhergehenden Ansprüche, wobei es sich bei dem hauptsächlichen Dienelastomer mit Epoxidfunktionen um ein epoxidiertes Dienelastomer aus der Gruppe bestehend aus epoxidierten Naturkautschuken, epoxidierten synthetischen Polyisoprenen und Mischungen davon handelt.

15. Reifen umfassend eine Kautschukzusammensetzung nach einem der vorhergehenden Ansprüche, wobei das hauptsächliche Dienelastomer mit Epoxidfunktionen 30 bis 100 phe, vorzugsweise 50 bis 100 phe, in Abmischung mit 0 bis 70 phe, vorzugsweise 0 bis 50 phe, eines oder mehrerer nebensächlicher nicht epoxidierter Elastomere ausmacht.

## Claims

1. Tyre comprising a rubber composition based on at least one predominant diene elastomer comprising epoxide functional groups, at least one reinforcing filler and a crosslinking system comprising a polycarboxylic acid of general formula (I): 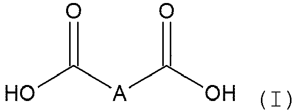 in which A represents a covalent bond or a hydrocarbon group which comprises at least 1 carbon atom, which is optionally substituted and which is optionally interrupted by one or more heteroatoms,
and an imidazole of general formula (II): 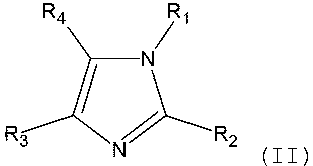 in which:
- R₁ represents a hydrocarbon group or a hydrogen atom,
- R₂ represents a hydrocarbon group,
- R₃ and R₄ represent, independently of one another, a hydrogen atom or a hydrocarbon group,
- or else R₃ and R₄ form, together with the carbon atoms of the imidazole ring to which they are attached, a ring.

2. Tyre comprising a rubber composition according to Claim 1, in which A represents a covalent bond or a divalent hydrocarbon group comprising from 1 to 1800 carbon atoms and preferably from 2 to 300 carbon atoms.

3. Tyre comprising a rubber composition according to either one of Claims 1 and 2, in which A is a divalent group of aliphatic or aromatic type or a group comprising at least an aliphatic portion and an aromatic portion.

4. Tyre comprising a rubber composition according to any one of Claims 1 to 3, in which A is an alkylene group.

5. Tyre comprising a composition according to any one of Claims 1 to 4, in which A is substituted by one or more carboxylic acid functional groups and/or by one or more hydrocarbon radicals chosen from alkyl, cycloalkyl, cycloalkylalkyl, aryl or aralkyl radicals, themselves substituted by one or more carboxylic acid functional groups.

6. Tyre comprising a composition according to any one of Claims 1 to 4, in which the A radical does not comprise another carboxylic acid functional group.

7. Tyre comprising a rubber composition according to any one of the preceding claims, in which the content of polyacid is within a range extending from 0.2 to 100 phr and preferably from 0.2 to 50 phr.

8. Tyre comprising a rubber composition according to any one of the preceding claims, in which:
- R₁ represents a hydrogen atom or an alkyl group having from 1 to 20 carbon atoms, a cycloalkyl group having from 5 to 24 carbon atoms, an aryl group having from 6 to 30 carbon atoms or an aralkyl group having from 7 to 25 carbon atoms, which group can optionally be interrupted by one or more heteroatoms and/or substituted,
- R₂ represents an alkyl group having from 1 to 20 carbon atoms, a cycloalkyl group having from 5 to 24 carbon atoms, an aryl group having from 6 to 30 carbon atoms or an aralkyl group having from 7 to 25 carbon atoms, which group can optionally be interrupted by one or more heteroatoms and/or substituted,
- R₃ and R₄ independently represent identical or different groups chosen from hydrogen or alkyl groups having from 1 to 20 carbon atoms, cycloalkyl groups having from 5 to 24 carbon atoms, aryl groups having from 6 to 30 carbon atoms or aralkyl groups having from 7 to 25 carbon atoms, which groups can optionally be interrupted by heteroatoms and/or substituted, or else R₃ and R₄ form, together with the carbon atoms of the imidazole ring to which they are attached, a ring chosen from aromatic, heteroaromatic or aliphatic rings comprising from 5 to 12 carbon atoms, preferably 5 or 6 carbon atoms.

9. Tyre comprising a rubber composition according to any one of Claims 1 to 8, in which R₁ represents a group chosen from alkyl groups having from 2 to 12 carbon atoms or aralkyl groups having from 7 to 13 carbon atoms, which groups can optionally be substituted.

10. Tyre comprising a rubber composition according to any one of Claims 1 to 9, in which R₁ represents an optionally substituted aralkyl group having from 7 to 13 carbon atoms and R₂ represents an alkyl group having from 1 to 12 carbon atoms.

11. Tyre comprising a rubber composition according to one of the preceding claims, in which R₃ and R₄ independently represent identical or different groups chosen from hydrogen or alkyl groups having from 1 to 12 carbon atoms, cycloalkyl groups having from 5 to 8 carbon atoms, aryl groups having from 6 to 24 carbon atoms or aralkyl groups having from 7 to 13 carbon atoms, which groups can optionally be substituted.

12. Tyre comprising a rubber composition according to one of Claims 1 to 10, in which R₃ and R₄ form, with the carbon atoms of the imidazole ring to which they are attached, a benzene, cyclohexene or cyclopentene ring.

13. Tyre comprising a rubber composition according to any one of the preceding claims, in which the imidazole content is within a range extending from 0.5 to 4 molar equivalents and preferably from 0.5 to 3 molar equivalents, with respect to the carboxylic acid functional groups present on the polycarboxylic acid of general formula (I).

14. Tyre comprising a rubber composition according to any one of the preceding claims, in which the predominant diene elastomer comprising epoxide functional groups is an epoxidized diene elastomer chosen from the group consisting of epoxidized natural rubbers, epoxidized synthetic polyisoprenes and the mixtures of these.

15. Tyre comprising a rubber composition according to any one of the preceding claims, in which the predominant diene elastomer comprising epoxide functional groups represents from 30 to 100 phr, preferably from 50 to 100 phr, as a blend with from 0 to 70 phr, preferably from 0 to 50 phr, of one or more minor non-epoxidized elastomers.
